# EUROPÄISCHE PATENTSCHRIFT

(11) **EP 0 791 135 B1**
(45) Veröffentlichungstag und Bekanntmachung des Hinweises auf die Patenterteilung: **07.01.2004**
(21) Anmeldenummer: 96931032.5
(22) Anmeldetag: 05.09.1996
(51) Int. Cl.: F02M 35/12, F01N 7/00

(54) **SCHALLDÄMPFER**
EXHAUST SILENCER
SILENCIEUX

(30) Priorität: 05.09.1995 DE 19532751; 29.09.1995 DE 19536342
(43) Veröffentlichungstag der Anmeldung: 27.08.1997
(73) Patentinhaber: Volkswagen Aktiengesellschaft, 38436 Wolfsburg (DE)
(72) Erfinder: WOLF, Franz, Josef, D-63628 Bad Soden-Salmünster (DE); KECK, Volkmar, D-38440 Wolfsburg (DE); WEBER, Otto, D-38444 Wolfsburg (DE); GRAUMANN, Heinz, D-38444 Wolfsburg (DE); DENKER, Dietrich, D-70599 Stuttgart (DE)
(74) Vertreter: Pohlmann, Bernd Michael
(86) Internationale Anmeldenummer: PCT/EP1996/003908
(87) Internationale Veröffentlichungsnummer: WO 1997/009527

(56) Entgegenhaltungen:
- EP-A- 0 376 299
- WO-A-80/02304
- FR-A- 945 632
- FR-A- 1 085 907
- FR-E- 63 026
- US-A- 2 012 331
- US-A- 4 969 536
- US-A- 5 014 816

## Beschreibung

Die Erfindung betrifft einen Reflexionsschalldämpfer gemäß dem Oberbegriff des Anspruchs 1 sowie eine Verwendung eines Reflexionsschalldämpfers gemäß Anspruch 9.

In Kraftfahrzeugen kommen unterschiedliche Schalldämpfersysteme zum Einsatz. Je nach Art der Schallerzeugung können Absorptionsschalldämpfer oder Reflexionsschalldämpfer, auch Kombinationen hiervon und in einigen Fällen auch Drosseldämpfer mit porösen durchströmten Schichten zum Einsatz kommen. Der Schalldämpfer dient der Verminderung der Schallausbreitung in Kanälen, Rohrleitungen und durch Öffnungen, ohne den Medientransport zu unterbinden. Im Kraftfahrzeug erfolgt der Einsatz insbesondere, um Auspuffgeräusche und Ansauggeräusche von Verbrennungsmotoren und Verdichtern zu vermindern. Zur Verminderung der Auspuffgeräusche kommen hier Reflexionsschalldämpfer zum Einsatz, in denen Querschnittsprünge und Reihenresonatoren die wesentlichen Dämpfungsmittel darstellen. Der hierbei auftretende höhere Strömungswiderstand führt zu einer geringen Leistungseinbuße und muß in Kauf genommen werden. Schwieriger ist es bei den Lufteinlaßkanälen der Brennkraftmaschine oder auch im Lüftungsbereich. Da hier ein höherer Strömungswiderstand meist zu enormen Leistungseinbußen führt. wird hier insbesondere mit Absorptionsmaterialien (Dämmatten, Mineralfasern) gedämpft.

Die US2,012,331 offenbart einen Schalldämpfer mit einem Einlaß und einem Auslaß und einer zwischen diesen liegenden Kammer. In der Kammer sind Blenden hintereinander angeordnet. Den Blenden vorgeschaltet ist eine Schaufelanordnung, welche die eintretende Gasströmung radial nach außen vortexartig wirbelt. An den zentralen Öffnungen der Blenden wird ein Geschwindigkeitsmaximum der Strömung erzeugt, wobei eine Strömungsumlenkung um über 90 Grad radial nach innen durch die Anordnung der Blenden bewirkt wird.

Aus der US 5,014,816 ist ein Resonator mit einem Luftstromkanal bekannt, der an einer Labyrinthanordnung vorbei führt. Die Labyrinthanordnung hat mehrere Öffnungen, die in einen geschlossenen Labyrinthtrakt führen.

Aus der FR 945.632 ist ein λ/4-Tiefresonator bekannt, der wenigstens zwei konzentrisch angeordnete Rohre aufweist. Ein Innenrohr hat Schlitze, über die ein Zugang in Kammern geschaffen wird. Die Kammern werden von der Außenseite des Innenrohrs und der Innenseite eines Außenrohrs sowie von Trennwänden begrenzt. Über die Größe der Schlitze kann die zu dämpfende Frequenz festgelegt werden.

Die WO80/02304 offenbart einen Resonator, in dem ein Durchflußkanal vorgesehen ist, der schräg durch den Resonator hindurch verläuft. Der Durchflußkanal wird durch sich gegenüberliegende parallele Bleche definiert. Jedes Blech weist einen langen Endabschnitt einen kurzen Endabschnitt und einen perforierten Kanalabschnitt auf, durch den hindurch Schallwellen in akustische Hohlkammern gelangen. Die Bleche sind am Einlaßbereich gebogen. Die Kammern sind durch Trennwände begrenzt, die sich quer zu den perforierten Kanalabschnitten und parallel zu den Endabschnitten erstrecken.

Die FR1.085.907 betrifft einen kombinierten Absorbtions- und Reflexionsschalldämpfer.

Aufgabe der vorliegenden Erfindung ist ein Reflexionsschalldämpfer für Kraftfahrzeuge, der einen möglichst niedrigen Strömungswiderstand bei gewünschtenfalls verhältnismäßig breitbandiger Schallabsenkung haben soll.

Diese Aufgabe wird bei dem eingangs beschriebenen Schalldämpfer erreicht mit den kennzeichnenden Merkmalen des Anspruchs 1. Hinsichtlich der Verwendung wird die Aufgabe gelöst mit den Merkmalen des Anspruchs 9.

Reflexionsschalldämpfer vermindern den Schalldurchgang im Kanal durch Rückwurf (Reflexion) der Schallwellen zur Schallquelle hin. Hierdurch kann sich auch der Schallpegel vor dem Schalldämpfer erhöhen, so daß dessen Wirksamkeit von der Einbaustelle abhängig sein kann. Solche Dämpfer sind um so wirksamer, je zahlreicher die Rückwurfstellen sind, wobei als Rückwurfstellen schallwirksame Querschnittsprünge, Umlenkungen und Reihen- und Abzweigresonatoren üblicherweise Verwendung finden. Je nach Art der Schallerzeugung und -ausbreitung ist jedoch zu beachten, daß Querschnittsprünge und Umlenkungen in Kanalsystemen wiederum selbst zu unerwünschten Geräuschen führen können, so daß auch grundsätzlich eine Herabsetzung der Strömungsgeschwindigkeit gewünscht ist. Gerade beim Kraftfahrzeug ist dies jedoch aufgrund begrenzter zur Verfügung stehender Räumlichkeiten nicht realisierbar, so daß Schallabsenkungen hier ein schwieriges Problem darstellen.

Erfindungsgemäß wurde nun gefunden, daß Reflexionsschalldämpfer mit mehreren unmittelbar aufeinanderfolgenden schallwirksamen Blenden im Kraftfahrzeug zur Schallabsenkung in Rohrleitungen geeignet sind. Unmittelbar heißt hier, daß die Blenden hinsichtlich der Schallausbreitung aufeinanderfolgen, das heißt daß beispielsweise keine schallreflektierende Wand, >90° Umlenkung oder Versetzung um mehr als den Strömungsquerschnitt dazwischen angeordnet ist. Der erfindungsgemäß in Kraftfahrzeugen eingesetzte Schalldämpfer ist also ein Reflexionsschalldämpfer mit einem Einlaß und einem Auslaß für einen Gasstrom und dazwischenliegend einer Kammer, in der quer zur Strömungsrichtung Blenden angeordnet sind, die den Strömungsquerschnitt der Kammer verkleinern und über deren (nicht mit der Kammer abschließenden) Kanten der Strömungsweg des Gases führt. "Über" bedeutet unmittelbarer Kontakt zum Strömungsweg. Die Kammer ist vorzugsweise als Rohrleitung aufgebaut, deren Verlauf vielfältige Gestaltungsmöglichkeiten gegeben sind. Vorteilhaft ist der Kammerquerschnitt rund oder oval aufgebaut. Die Blenden sind allseitig den Querschnitt verringernde Elemente. Als Blenden sind plattenartige Gebilde, beispielsweise Bleche, auch Kunststoffbleche, vorgesehen, die den Schall reflektieren. Bei der Verwendung von Blenden kann das Blendenloch rund oder in anderer Geometrie gestaltet sein und mittig oder außermittig in der Kammer liegen.

Vorzugsweise sind drei bis zwanzig und insbesondere vier bis fünfzehn Blenden vorgesehen, die vorzugsweise in der Kammer unmittelbar aufeinanderfolgen. Der durch die Blenden führende Strömungsweg kann einen im wesentlichen gleichbleibenden Querschnitt oder auch einen veränderlichen Querschnitt, beispielsweise einen sich erweiternden oder sich verjüngenden Querschnitt, aufweisen, und hat vorzugsweise eine lichte Weite von mindestens der des Einlasses und Auslasses der Kammer. Auch die Kammer kann in Strömungsrichtung mit einem gleichen oder mit einem veränderlichen Querschnitt aufgebaut sein.

Die Blenden können außerdem, insbesondere bei gleichbleibendem Querschnitt des Strömungsweges und der Kammer, mit unterschiedlichen Abständen zueinander aufgebaut sein. Durch diese und im vorigen Absatz beschriebenen unterschiedlichen geometrischen Ausbildungen (unterschiedliche Blendenhöhen in dem Strömungsweg) werden unterschiedliche Volumina zwischen aufeinanderfolgenden Blenden erreicht, wodurch unterschiedliche Resonanzen entstehen. Hierdurch ist es möglich, den Schalldämpfer (auch: Rohrdämpfer) breitbandig auszulegen, so daß in einem Bereich von 0,5 bis 8 kHz über einen zusammenhängenden Frequenzabschnitt von mindestens 500 Hz in diesem eine resultierende Dämpfung von mindestens 15 dB (A) erreicht wird. Vorzugsweise ist diese Dämpfung bei jeder Frequenz in dem Frequenzabschnitt gegeben. In den bevorzugten Ausführungsformen liegt der Frequenzabschnitt zwischen 1 und 5 kHz und in besonders bevorzugten Ausführungsformen erstreckt sich der Frequenzabschnitt über mindestens 1 kHz und insbesondere über mindestens 3 kHz und liegt vorzugsweise im Frequenzbereich von 2 kHz bis 5 kHz. Mit solchen breitbandigen Dämpfern wird erfindungsgemäß erreicht, daß der Schalldämpfer insbesondere fahrzeugindividuelle Geräuschemissionen wirksam absenkt, das heißt Geräuschemissionen, die von Fahrzeug zu Fahrzeug aufgrund von beispielsweise Toleranzen bei unterschiedlichen Frequenzen auftreten.

In einer weiteren bevorzugten Ausführungsform ist der Strömungsverlauf durch die Blenden ohne Umlenkungen an diesen, das heißt die Blenden sind ohne wesentliche gegenseitige Überlappungen hinsichtlich des Strömungsverlaufes angeordnet. Hierdurch wird ein besonders niedriger Strömungswiderstand, insbesondere gegenüber Schalldämpfern mit Resonanzkammern erreicht, die nur kleine Ein- und Austrittsöffnungen, meist Rohrstücke, für den Gasstrom haben.

Bevorzugt kommt der erfindungsgemäße Schalldämpfer in Kraftfahrzeugen in Rohrleitungen zum Einsatz, in denen im Betrieb ein Gasdruck von mindestens 0,3 bar Überdruck, insbesondere mindestens 0,6 bar Überdruck besteht. Der erfindungsgemäße Schalldämpfer kann insbesondere saugseitig eingesetzt werden, d.h. auch in Rohrleitungen, in denen ein geringer Unterdruck besteht. Das durch den Schalldämpfer strömende Gas fließt abhängig von einem Betriebszustand des Kraftfahrzeuges, z.B. einer Motorlast oder einer Lüfterleistung. Vorteilhaft können auch mehrere Rohrleitungen parallel angeordnet werden und insbesondere lassen sich in einer Kammer mehrere Strömungswege vorsehen. Gerade bei der letzteren Ausführungsform wird es möglich, daß zwei oder mehr Strömungswege gemeinsame Blenden haben, zwischen denen ein Gasaustausch von dem einen Strömungsweg zum anderen (und zurück) möglich ist.

Vorzugsweise ist der Schalldämpfer vorgesehen zur Durchleitung von Luft und insbesondere dient der Schalldämpfer als Lufteinlaßkanal (Ansauggeräuschdämpfer) für eine Brennkraftmaschine des Kraftfahrzeugs. Besonders vorteilhaft kommt diese Ausbildungsform mit einem Lader, insbesondere Turbolader zum Einsatz. Der erfindungsgemäße Schalldämpfer dient hier insbesondere um Ladergeräusche zu dämpfen, die von Unwuchten in dem Laderrotor hervorgerufen werden. Das hierbei auftretende störende Geräusch ist nicht nur von der Laderdrehzahl abhängig, sondern noch mehr von Fertigungstoleranzen, so daß eine breitbandige Schallabsenkung in dem zwischen dem Lader und der Brennkraftmaschine liegenden Rohr erforderlich ist, da die auftretenden Störfrequenzen individuell sind, das heißt nicht genau spezifiziert werden können.

Die Erfindung betrifft auch die Verwendung des oben beschriebenen Schalldämpfers, insbesondere Rohrdämpfers in einem Kraftfahrzeug bzw. als Lufteinlaßrohr einer Brennkraftmaschine, insbesondere einer mit einem Lader betriebenen Brennkraftmaschine.

Der erfindungsgemäße Schalldämpfer arbeitet mit mehreren Helmholtzresonatoren, die in Reihe geschaltet sind. Durch Veränderung der Abmessungen der Resonatoren (Volumen) zwischen den Blenden, dem Durchmesser des Strömungskanals bzw. der Blendenöffnung, Länge und Durchmesser von Eintrittsrohren und Austrittsrohren lassen sich diese aufeinander abstimmen, um die gewünschte breitbandige Schallabsenkung zu erhalten.

Die Erfindung wird im folgenden anhand von Zeichnungen und Ausführungsbeispielen näher beschrieben.

Es zeigen
- Figur 1: einen schmalbandigen Rohrdämpfer;
- Figur 2: einen ersten breitbandigen Rohrdämpfer;
- Figur 3: einen zweiten breitbandigen Rohrdämpfer;
- Figur 4: ein Dämpfungsspektrum eines mittelbreitbandigen Rohrdämpfers;
- Figur 5: ein nicht unter den Gegenstand von Anspruch 1 fallendes Strömungsrohr mit zwei miteinander kommunizierenden Strömungswegen;
- Figur 6: ein Diagramm mit dem Dämpfungsverhalten des Rohrdämpfers aus Figur 5; und
- Figur 7: einen nicht unter der Gegenstand von Anspruch 1 fallenden Ansauggeräuschdämpfer.

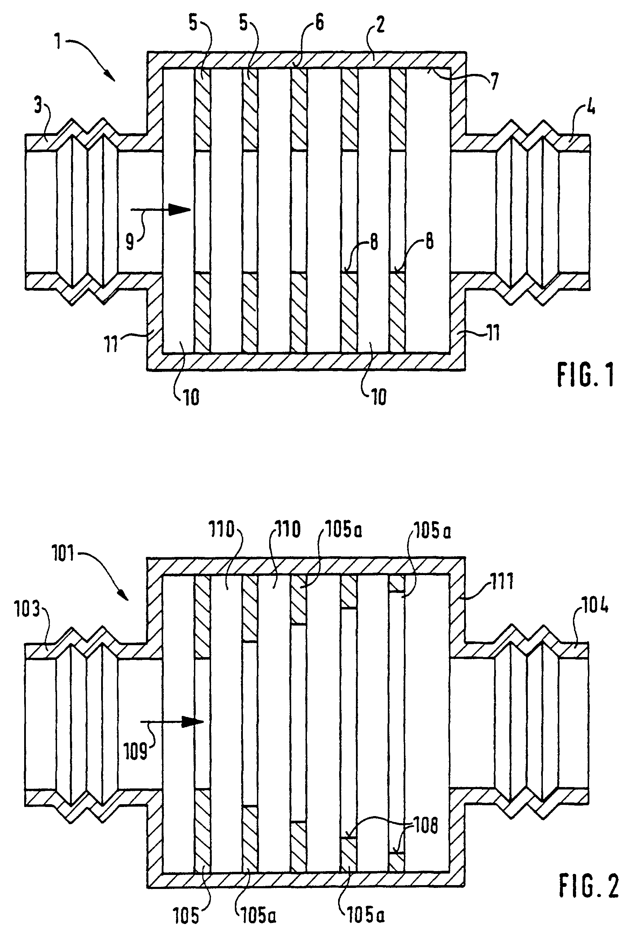

Der in Figur 1 dargestellte Rohrdämpfer 1 ist aufgebaut aus einer rohrförmigen Kammer 2, die an ihrem einen Ende mit einem Einlaßstutzen 3 und an ihrem gegenüberliegenden Ende mit einem Auslaßstutzen 4 versehen ist. In der Kammer 2 sind fünf Ringblenden 5 befestigt, die mit ihren Außenkanten 6 mit der Innenwandung 7 der rohrförmigen Kammer 2 verbunden sind. Die Öffnungen 8 der Ringblenden 5 haben in etwa dieselbe lichte Weite wie die Stutzen 3 und 4 und sind mit diesen überdeckend angeordnet. Hierdurch ergibt sich ein Strömungsweg 9 (Pfeil) durch den Rohrdämpfer 1 ohne Umlenkungen an den Blenden 5. Im Falle einer Gasströmung durch den Rohrdämpfer 1 bilden die Zwischenräume 10 zwischen den Ringblenden 5 und der ersten bzw. letzten Ringblende und den Seitenwandungen 11 der Kammer 2 Resonanzkammern, die, entsprechend der Geometrie des Rohrdämpfers 1, in dem Rohrdämpfer 1 zu einer Schallabsenkung in einem bestimmten Frequenzbereich führen.

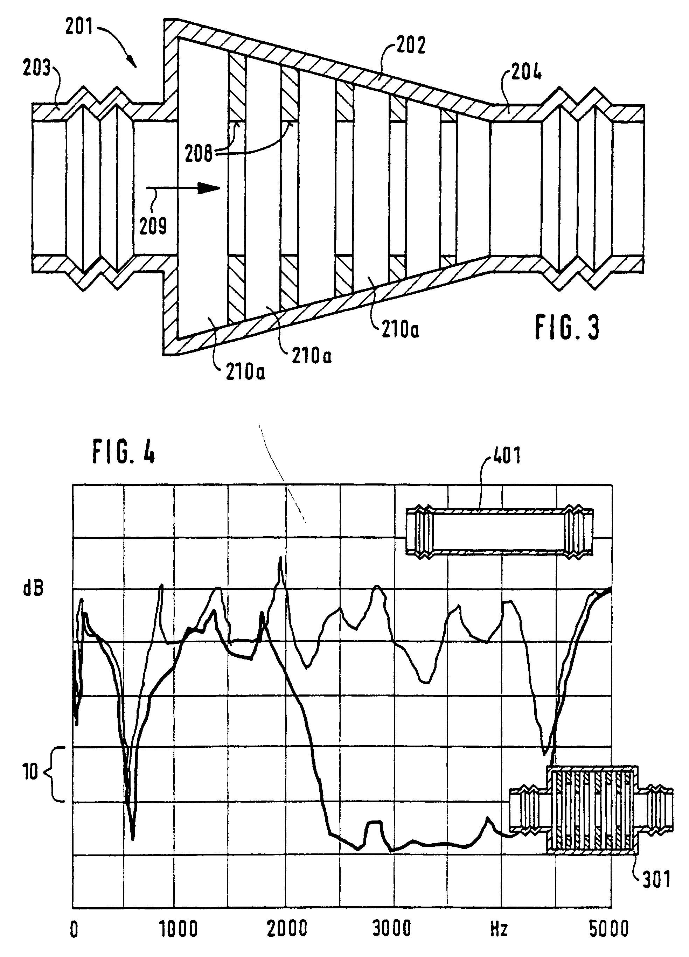

Zur Verbreiterung des Frequenzbereiches, in dem die Schallabsenkung stattfindet, kann das Volumen der Zwischenräume 10 verändert werden durch Veränderung des Abstandes der Ringblenden 5 zueinander, Veränderung der Größe der Öffnungen 8 und/oder Veränderung des Außendurchmessers der Ringblenden 5. Die letzten beiden Möglichkeiten sind in den Figuren 2 und 3 illustriert. (Gleiche Zehnerzahlen stehen für gleichartige Teile). Der Rohrdämpfer 101 ist prinzipiell gleich aufgebaut wie der Rohrdämpfer 1 mit dem Unterschied, daß die Öffnungen 108 nur bei der in Strömungsrichtung (Pfeil) gesehenen ersten Blende 105 die lichte Weite des Einlaßstutzens 103 bzw. des Auslaßstutzens 104 hat. Die übrigen Ringblenden 105a haben in Strömungsrichtung gesehen einen ansteigenden Blendendurchmesser 108, so daß die Zwischenräume 110 in Strömungsrichtung abnehmende Volumina haben. An der Seitenwand 111, die mit dem Auslaßstutzen 104 korrespondiert, ergibt sich außerdem ein Querschnittsprung, der auch der Schwingungsdämpfung dient. Der Rohrdämpfer 201 aus Figur 3 hat im Unterschied hierzu Blendenöffnungen 208, die allesamt die in etwa gleiche lichte Weite haben wie die Stutzen 203 und 204. Da aber die Kammer 202 in Strömungsrichtung (Pfeil) trichterförmig verjüngt ist, ergeben sich wiederum wie in Figur 2 in Strömungsrichtung gesehen abnehmende Volumina der Zwischenräume 210a. Auch hier wird wie in Figur 2 ein breiterer Dämpfungsbereich bei geringeren Absolutwerten der Dämpfung erreicht.

In Figur 4 ist eine weitere Ausführungsform eines Rohrdämpfers 301 dargestellt, der mit einem glattwandigen Rohr 401 verglichen wird. Der Aufbau des Rohrdämpfers 301 ähnelt dem in Figur 2 gezeigten mit dem Unterschied, daß nur zwei unterschiedliche Blendenöffnungen, diese jedoch - von der Mitte aus in Richtung Einlaß bzw. Auslaß gesehen - abwechselnd angeordnet sind. Hierdurch ergibt sich gegenüber dem in Durchlaß und Länge vergleichbaren Rohr 401 zwischen 2000 und 4500 Hz eine Absenkung des Schallpegels von durchschnittlich 25 dB, wodurch eine beträchtliche Geräuschminderung erreicht wird.

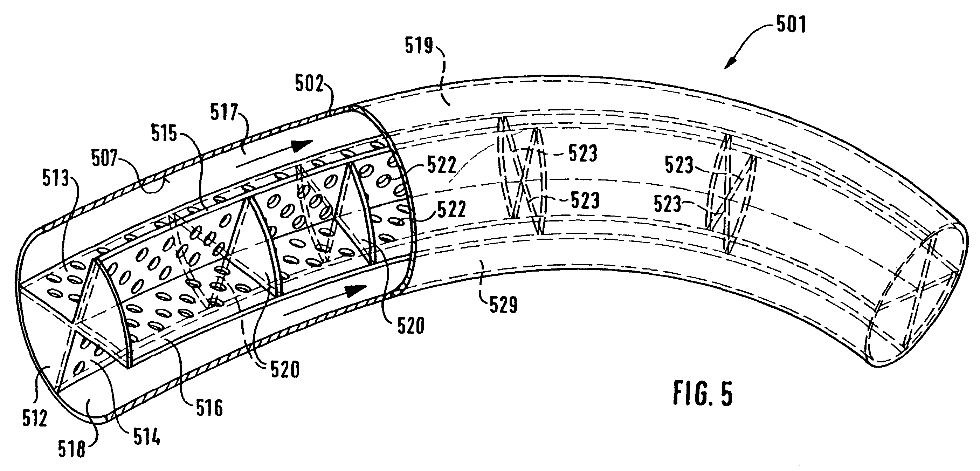

Der in Figur 5 dargestellte Rohrdämpfer 501 hat gegenüber den oben beschriebenen Rohrdämpfern einen deutlich anderen, aber prinzipiell gleichen Aufbau. Bereits rein äußerlich fällt auf, daß der Rohrdämpfer 501 bananenförmig gebogen ist und einen ovalen Querschnitt hat. Der ovale Querschnitt ist über den Verlauf des Rohrdämpfers im wesentlichen gleichbleibend. Im Inneren enthält der Rohrdämpfer 501 einen oberen Strömungsweg 519 und einen unteren Strömungsweg 529. Zwischen diesen Strömungswegen 519 und 529 ist ein kreuzförmiger Steg 512 eingesetzt, dessen vier Schenkel 513 bis 516 mit der Innenwandung 507 des Rohrdämpfers 501 verbunden sind. Hierdurch wird der Innenraum des Rohrdämpfers 501 in vier axial verlaufende Teilräume unterteilt, von denen der obere den oberen Strömungsweg 519 und der untere den unteren Strömungsweg 529 bildet. In den verbleibenden Teilräumen 517 und 518, die einander gegenüberliegen, sind zu Beginn des Rohrdämpfers 501 sowie an dessen Ende und in unregelmäßigen Abständen auch über dessen Verlauf Trennwände 520 eingesetzt, die die Teilräume 517 und 518 in einzelne Abschnitte 521 mit unterschiedlichen benachbarten (aber gleichen gegenüberliegenden) Volumina unterteilen. In dem kreuzförmigen Steg 512 sind in den Schenkeln 513 bis 516 Löcher 522 eingelassen, so daß der obere Strömungsweg 519 mit den Teilräumen 517 und 518 und diese wiederum mit dem unteren Strömungsweg 529 kommunizieren. Hierdurch wird erreicht, daß durch die Strömungswege 519 und 529 und über die Kanten 523 der Trennwände 520 fließende Teilgasströme (Pfeile) einen nur geringen Strömungswiderstand haben, für den Schall sind hingegen die Schenkel 513 bis 516 durchlässig, so daß für diesen die Trennwände 520 Kulissen sind, zwischen denen für den Schall Resonanzräume bestehen. Diese Ausbildung hat ferner noch den Vorteil, daß in dem Gasstrom enthaltene nicht gasförmige Bestandteile, wie zum Beispiel Öltröpfchen, wenn sie sich aus dem oberen Strömungsweg 519 abscheiden, durch die Löcher 522, die Abschnitte 521 und wieder die Löcher 522 hindurch in den unteren Strömungsweg 529 gelangen, der diese Bestandteile dann wieder mitnimmt und austrägt. Hierdurch wird ein Versotten der Abschnitte 521 vermieden.

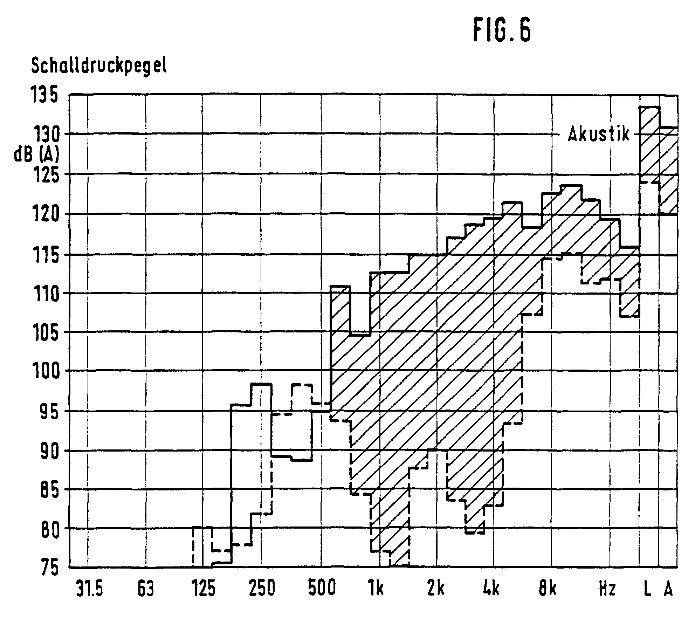

Die Dämpfungswirkung ist in Figur 6 dargestellt, wobei die gestrichelte Linie den Schalldruckpegel nach dem Rohrdämpfer 501 wiedergibt, die durchgezogene Linie den Schalldruck für ein entsprechend aufgebautes Rohr ohne die Trennwände 520 und ohne den kreuzförmigen Steg 512. Zwischen etwa 800 Hz und 6 kHz wird über den gesamten Bereich eine Schallabsenkung von mindestens 25 dB (A) erreicht, einzelne Frequenzen liegen sogar noch deutlich darüber. Auch über das gesamte Spektrum ist absolut (L) und auch für das menschliche Hörempfinden (A) eine deutliche Absenkung des Schallpegels erreicht (rechter Teil des Diagramms).

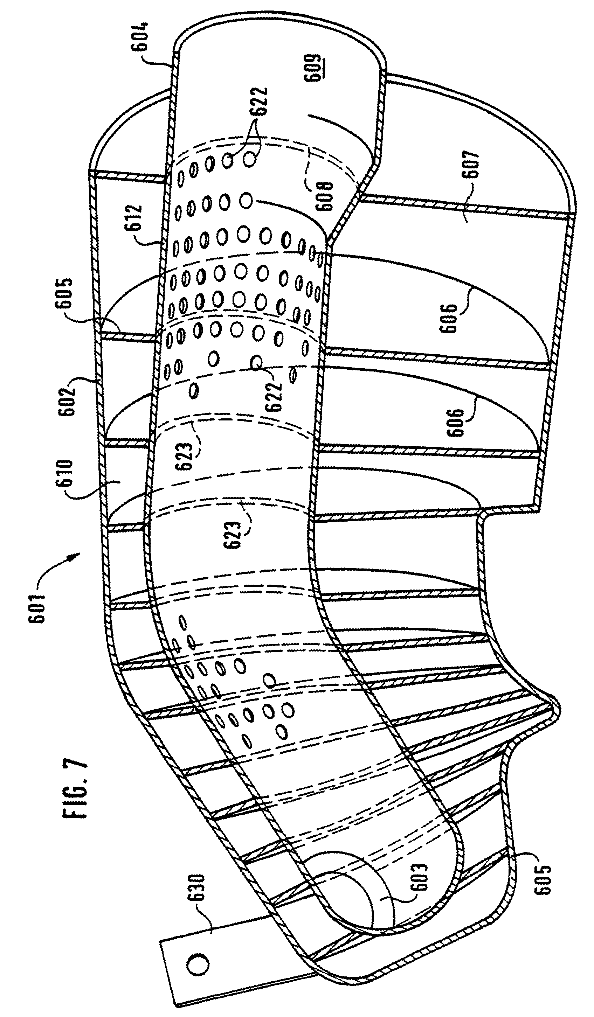

Der in Figur 7 dargestellte Ansauggeräuschdämpfer 601 stellt eine Kombination aus den oben beschriebenen Rohrdämpfern dar. Der prinzipielle Aufbau ist wie bei dem Rohrdämpfer aus Figur 3, d.h. eine rohrförmige Kammer 602 enthält elf Blenden 605, die einen Strömungsweg 609 umschließen. Die Blenden 605 sind mit ihren Außenkanten 606 mit der Innenwandung 607 der rohrförmigen Kammer 602 verbunden, so daß zwei benachbarte Blenden 605 zusammen mit dem zugehörigen Abschnitt der Innenwandung 607 einen ringähnlichen Zwischenraum 610 definieren, durch dessen Ringöffnung der Strömungsweg 609 führt. Ähnlich wie in der Figur 5 ist der Strömungsweg 609 mit einer Abdeckung 612 versehen, die Löcher 622 aufweist, so daß eine Gasströmung ohne wesentlichen Widerstand durch den Strömungsweg 609 führbar ist, Schallwellen sich jedoch durch die Löcher 622 in die Zwischenräume 610 ausdehnen können, in denen durch Reflexion eine Schallminderung erreicht wird.

Im Unterschied zum Rohrdämpfer 201 ist der Ansauggeräuschdämpfer 601 nicht nur mit einem mehrfach gekrümmten Strömungsweg 609 versehen, sondern dieser ist auch außermittig der Kammer 602 angeordnet. Hinzu kommt, daß die Wand 607 der Kammer 602 Bereiche mit gleichbleibendem Durchmesser, Durchmessersprünge wie auch Bereiche mit einer kontinuierlichen Durchmesserveränderung aufweist, wobei außerdem die Abstände der Blenden 605 zueinander variieren. Hierdurch wird eine besonders breitbandige Geräuschdämpfung erreicht.

Außerdem ist bei dem Ansauggeräuschdämpfer 601 der Einlaßstutzen 603 mit einer Befestigungslasche 630 versehen.

Die Erfindung ermöglicht eine einfache und preiswerte Schallabsenkung bei gasführenden Rohren, insbesondere bei luftdurchströmten Leitungen.

## Patentansprüche

1. Reflexionsschalldämpfer für gasdurchströmbare Rohrleitungen, welcher Reflexionsschalldämpfer in einem Luftsaugkanal einer Brennkraftmaschine auzuordnenist, mit einem Einlaß, einem Auslaß und einer zwischen diesen liegenden Kammer, in der quer zur Strömungsrichtung den Strömungsquerschnitt der Kammer verkleinernde Blenden angeordnet sind, **gekennzeichnet durch** eine axiale Folge von plattenartigen allseilig den Querschnitt der Kammer verringernden Blenden dergestalt, daß zwischen dem Einlaß (*03) und dem Auslaß (*04) ein kontinuierlicher Strömungspfad mit stetigem Verlauf ohne schallreflektierende Wandung, Umlenkung über 90 Grad oder Versetzung um mehr als den Strömungsquerschnitt an den beziehungsweise **durch** die Blenden ohne Abdeckung von Kanten der Blenden definiert ist.

2. Reflexionsschalldämpfer nach Anspruch 1, **dadurch gekennzeichnet, daß** der Strömungspfad gekrümmt ist.

3. Reflexionsschalldämpfer nach Anspruch 1 oder 2, **gekennzeichnet durch** variierende Strömungsquerschnitte an aufeinanderfolgenden Blenden (*05; 520) bei konstantem Querschnitt der Kammer (*02) oder variierende Kammerquerschnitte bei konstanten Strömungsquerschnitten an aufeinanderfolgenden Blenden.

4. Reflexionsschalldämpfer nach einem der Ansprüche 1 bis 3, **gekennzeichnet durch** ohne Umlenkung wirkungsparallel zueinander verlaufende Strömungswege (519, 529) in der Kammer (502).

5. Reflexionsschalldämpfer nach einem der Ansprüche 1 bis 4, **gekennzeichnet durch** eine axiale Folge von Blenden mit variierenden radialen Tiefen und variierenden axialen Abständen voneinander.

6. Reflexionsschalldämpfer nach einem der Ansprüche 1 bis 5, **gekennzeichnet durch** diskontinuierliche Kammerquerschnittsänderungen, bezogen auf die Strömungsrichtung als Abszisse.

7. Reflexionsschalldämpfer nach einem der Ansprüche 1 bis 6, **gekennzeichnet durch** eine Anordnung von mindestens zwei parallel zueinander geschalteten Reflexionsschalldämpfem (*01) im Luftansaugkanal der Brennkraftmaschine.

8. Reflexionsschalldämpfer nach einem der Ansprüche 1 bis 7, **gekennzeichnet durch** eine Anordnung des Reflexionsschalldämpfers (*01) zwischen einer mit Aufladung betriebenen Brennkraftmaschine und dem Auflader.

9. Verwendung eines Reflexionsschalldämpfers mit Merkmalen nach einem der Ansprüche 1 bis 8 zum Dämpfen von Ansauggeräuschen in Kraftfahrzeugen mit einem Auflader oder mit einem Kompressor.

10. Verwendung nach Anspruch 9 unter Benutzung eines Reflexionsschalldämpfers, der mittels einer Konfiguration und Dimensionierung seiner Blenden (*05; 520) und seiner Kammer (*02) derart abgestimmt ist, daß im Bereich zwischen 500 Hz und 8 kHz über eine Bandbreite von mindestens 500 Hz eine resultierende Dämpfung von mindestens 15 dB (A) erhältlich ist.

## Claims

1. A reflected sound silencer for pipelines adapted to carry a gas flow, said reflected sound silencer being disposed in an air intake duct of an internal combustion engine, with an inlet, an outlet, and a chamber situated between the said inlet and outlet, in which chamber there are disposed transversely of the direction of flow screens which reduce the flow cross-section of the chamber, **characterised by** an axial sequence of screens in the form of plates which reduce the cross-section of the chamber in all directions, in such manner that there is defined between the inlet (*03) and the outlet (*04) a continuous flow path having a continuous configuration without sound-reflecting walls, deflection through 90° or offsetting by more than the flow cross-section at or through the screens respectively, without covering of edges of the screens.

2. A reflected sound silencer according to claim 1, **characterised in that** the flow path is curved.

3. A reflected sound silencer according to claim 1 or 2, **characterised by** varying flow cross-sections at consecutive screens (*05; 520) for a constant cross-section of the chamber (*02) or varying chamber cross-sections with constant flow cross-sections at consecutive screens.

4. A reflected sound silencer according to any one of claims 1 to 3, **characterised by** flow paths (519, 529) in the chamber (502) which without deflection extend with parallel action to one another.

5. A reflected sound silencer according to any one of claims 1 to 4, **characterised in** by an axial sequence of screens with varying radial depths and varying axial distances from one another.

6. A reflected sound silencer according to any one of claims 1 to 5, **characterised by** discontinuous chamber cross-section changes with respect to the flow direction as abscissa.

7. A reflected sound silencer according to any one of claims 1 to 6, **characterised by** an arrangement of at least two reflected sound silencers (*01) connected in parallel to one another in the air intake duct of the internal combustion engine.

8. A reflected sound silencer according to any one of claims 1 to 7, **characterised by** an arrangement of the reflected sound silencer (*01) between a supercharged internal combustion engine and the supercharger.

9. Use of a reflected sound silencer with features according to any one of claims 1 to 8 for attenuating intake noise in motor vehicles having a supercharger or a compressor.

10. Use according to claim 9, with the utilisation of a reflected sound silencer which by means of a configuration and dimensioning of its screens (*05; 520) and its chamber (*02) is so adapted that a resulting attenuation of at least 15 dB (A) is obtainable in the range between 500 Hz and 8 kHz over a band width of at least 500 Hz.

## Revendications

1. Silencieux à réflexion pour une conduite empruntée par un flux de gaz, lequel silencieux à réflexion est disposé dans la conduite d'admission de l'air d'un moteur à explosion, qui comporte une entrée, une sortie et une chambre disposée entre les deux et dans lequel sont disposées des plaques orientées perpendiculairement par rapport à la direction du flux d'air pour diminuer la section transversale disponible pour le flux d'air, **caractérisé par** une succession axiale de diaphragmes ayant la forme de plaques et diminuant sur tous les côtés la section transversale de la chambre de manière à définir entre l'entrée (*03) et la sortie (*04), un trajet ininterrompu pour le flux avec un profil continu, sans paroi réfléchissant le son, sans changement de direction dépassant 90 degrés, sans plaques décalées par rapport à la section transversale disponible pour le flux d'air et sans élément de recouvrement au bord des plaques.

2. Silencieux à réflexion selon la revendication 1, **caractérisé par le fait que** le trajet du flux est courbe.

3. Silencieux à réflexion selon la revendication 1 ou 2, **caractérisé par** une variation de la section transversale disponible pour le flux au niveau des plaques (^{*}05) ; 520) qui se suivent, alors que la section transversale de la chambre (^{*}02) reste constante ou par une variation de la section transversale de la chambre, alors que la section transversale disponible pour le flux au niveau des plaques qui se suivent, reste constante.

4. Silencieux à réflexion selon l'une des revendications 1 à 3, **caractérisé par** les trajectoires de flux (519, 529) sans changement de direction, agencées de manière mutuellement parallèle dans la chambre (502).

5. Silencieux à réflexion selon l'une des revendications 1 à 4, **caractérisé par** une succession axiale de plaques avec des dimensions radiales variables et un espacement axial variable.

6. Silencieux à réflexion selon l'une des revendications 1 à 5, **caractérisé par** des changements discontinus de la section transversale de la chambre suivant la direction du flux, prise comme abscisse.

7. Silencieux à réflexion selon l'une des revendications 1 à 6, **caractérisé par** un agencement d'au moins deux silencieux à réflexion (*01) montés en parallèle l'un par rapport à l'autre sur la conduite d'admission de l'air d'un moteur à explosion.

8. Silencieux à réflexion selon l'une des revendications 1 à 7, **caractérisé par** une disposition du silencieux à réflexion (*01) entre un moteur à explosion alimenté par un moyen de suralimentation et ledit moyen de suralimentation.

9. Utilisation d'un silencieux à réflexion avec les caractéristiques de l'une des revendications 1 à 8 pour amortir les bruits associés à l'alimentation en air d'un véhicule automobile, équipé d'un moyen de suralimentation ou d'un compresseur.

10. Utilisation selon la revendication 9 faisant appel à un silencieux à réflexion dimensionné et configuré au niveau de ses plaques (*05 ; 520) et de sa chambre (*02) de manière à ce que, dans la région entre 500 Hz et 8 KHz et sur une largeur de bande d'au moins 500 Hz, on obtienne un amortissement d'au moins 15 dB (A).
